# EUROPÄISCHE PATENTSCHRIFT

(11) **EP 2 621 641 B1**
(45) Veröffentlichungstag und Bekanntmachung des Hinweises auf die Patenterteilung: **30.03.2016**
(21) Anmeldenummer: 11760747.3
(22) Anmeldetag: 14.09.2011
(51) Int. Cl.: B05B 15/12, B01D 46/00

(54) **FILTERVORRICHTUNG UND VERFAHREN ZUM ABTRENNEN VON NASSLACK-OVERSPRAY**
FILTER DEVICE AND METHOD FOR REMOVING WET-PAINT OVERSPRAY
DISPOSITIF DE FILTRAGE ET PROCÉDÉ DE SÉPARATION DE SURPULVÉRISATION DE VERNIS HUMIDE

(30) Priorität: 28.09.2010 DE 102010041552
(43) Veröffentlichungstag der Anmeldung: 07.08.2013
(73) Patentinhaber: Dürr Systems GmbH, 74321 Bietigheim-Bissingen (DE)
(72) Erfinder: HOLLER, Sebastian, 70825 Korntal-Münchingen (DE); STEINBACH, Jürgen, 71282 Hemmingen (DE); FRIZ, Katharina, 70199 Stuttgart (DE)
(74) Vertreter: Hoeger, Stellrecht & Partner Patentanwälte mbB
(86) Internationale Anmeldenummer: PCT/EP2011/065937
(87) Internationale Veröffentlichungsnummer: WO 2012/048980

(56) Entgegenhaltungen:
- EP-A2- 1 704 925
- US-A- 5 271 750

## Beschreibung

Die vorliegende Erfindung betrifft eine Filtervorrichtung zum Abtrennen von Lack-Overspray aus einem Overspray-Partikel enthaltenden Rohgasstrom, wobei die Filtervorrichtung mindestens ein Filterelement, welchem zumindest ein Teil des Rohgasstrom zuführbar ist, und eine Reingaskammer, welcher der mittels des Filterelements gefilterte Rohgasstrom als Reingasstrom zuführbar ist, umfasst.

Eine solche Vorrichtung ist beispielsweise aus der DE 10 2007 040 901 A1 bekannt.

Wird ein Filterelement einer solchen Filtervorrichtung mechanisch verletzt, so dass an einer oder mehreren Stellen der ungefilterte Rohgasstrom auf die Reingasseite der Filtervorrichtung gelangt, werden die Reingasseite der Filtervorrichtung und die stromabwärts von der Filtervorrichtung gelegenen Bereiche einer Lackieranlage, welche die Filtervorrichtung enthält, durch die nicht herausgefilterten Schmutzpartikel aus dem Rohgasstrom (insbesondere Overspray-Partikel und gegebenenfalls Partikel eines Filterhilfsmaterials) verunreinigt.

Die EP 1 704 925 A2 offenbart eine Filtervorrichtung gemäß dem Oberbegriff von Anspruch 1.

Die US 5 271 750 A offenbart Filtervorrichtungen mit einem stromabwärts von den Filtervorrichtungen angeordneten Gebläse und einem stromabwärts von dem Gebläse angeordneten Sicherheitsfilter.

Der vorliegenden Erfindung liegt die Aufgabe zugrunde, die Verschmutzung der Reingasseite der Filtervorrichtung und einer die Filtervorrichtung enthaltenden Lackieranlage im Falle eines Filterdurchbruchs an mindestens einem Filterelement der Filtervorrichtung so gering wie möglich zu halten.

Diese Aufgabe wird durch eine Filtervorrichtung nach Anspruch 1 gelöst.

Der vorliegenden Erfindung liegt das Konzept zugrunde, das im Falle eines Filterdurchbruchs durch den Hauptfilter, der durch das mindestens eine Filterelement der Filtervorrichtung gebildet ist, durchgetretene Material ortsnah aufzufangen, so dass der Reingaskammer im Strömungsweg des Reingasstromes nachgeordnete Anlagenteile, insbesondere Ventilatoren, Sensoren und Luft-Konditioniervorrichtungen (beispielsweise Kühler und/oder Befeuchter), vor einer Verschmutzung im Falle eines Filterdurchbruchs geschützt werden.

Um die Strecke, welche das ungefilterte Rohgas im Falle eines Filterdurchbruchs auf der Reingasseite der Filtervorrichtung bis zum Sicherheitsfilter zurücklegt, möglichst kurz zu halten, ist es günstig, wenn der Sicherheitsfilter in die Reingaskammer der Filtervorrichtung integriert ist.

Insbesondere kann vorgesehen sein, dass mindestens ein Sicherheitsfilter innerhalb der Reingaskammer oder an einer Begrenzungswand der Reingaskammer angeordnet ist.

Die Reingaskammer kann beispielsweise als ein, insbesondere im Wesentlichen quaderförmiger, Reingaskasten ausgebildet sein.

Das mindestens eine Filterelement des Hauptfilters umfasst vorzugsweise eine Filtermembran, welche zum Abtrennen von Lack-Overspray aus dem Rohgasstrom dient. Eine Beschädigung der Filtermembran, welche einen ungefilterten Durchtritt des Overspray-Partikel enthaltenden Rohgasstroms durch das Filterelement ermöglicht, stellt einen Filterdurchbruch an dem betreffenden Filterelement dar.

Vorzugsweise umfasst die Filtervorrichtung einen Hauptfilter, der mindestens ein als Trockenfilter ausgebildetes Filterelement umfasst, also einen Filter, mit dem eine trockene Filtration durchführbar ist. Eine trockene Filtration ist eine Filtration des durch den Filter hindurchtretenden Gasstroms, die ohne Auswaschung mit einer Reinigungsflüssigkeit erfolgt. Dies schließt nicht aus, dass eine im Zuge der Filtration an dem Filter ausgebildete Schicht von auszufilterndem Material und gegebenenfalls Filterhilfsmaterial durch Beaufschlagung mit einem flüssigen Reinigungsmedium abgewaschen wird.

Vorzugsweise umfasst der Hauptfilter ausschließlich Trockenfilter.

Wenn die Filtervorrichtung einen Hauptfilter mit mehreren Filterelementen umfasst, so ist vorzugsweise vorgesehen, dass die Reingaskammer die Reingasströme aus mehreren, insbesondere aus allen, Filterelementen der Filtervorrichtung aufnimmt.

Ferner ist vorzugsweise vorgesehen, dass mindestens ein Filterelement an der Reingaskammer der Filtervorrichtung gehalten ist.

Zu diesem Zweck kann die Reingaskammer eine Filterelementaufnahme mit mindestens einer Filterelementhalterung und vorzugsweise mit einer Aufnahmeöffnung für den Durchtritt der Filterelemente in einen Filterelementaufnahmeraum der Filtervorrichtung umfassen.

Wenn die erfindungsgemäße Filtervorrichtung einen Bestandteil einer Vorrichtung zum Abtrennen von Lack-Overspray aus einem Overspray-Partikel enthaltenden Rohgasstrom bildet, welche mehrere solcher Filtervorrichtungen umfasst, so ist es von Vorteil, dass die Filtervorrichtung einen Reingaskanal umfasst, durch welchen Reingas aus der Reingaskammer der Filtervorrichtung einem Reingas-Sammelkanal zuführbar ist, wobei der Reingas-Sammelkanal auch das Reingas mindestens einer anderen Filtervorrichtung aufnimmt und nachgeschalteten Anlageteilen, beispielsweise einem Gebläse und/oder einer Luft-Konditioniervorrichtung (insbesondere einem Kühler und/oder einem Befeuchter), zuführt.

Um in einem solchen Fall eine Verschmutzung des Reingas-Sammelkanals und der dem Reingas-Sammelkanal nachgeordneten Bestandteile der Lackieranlage möglichst gering zu halten, ist es günstig, dass der Sicherheitsfilter der Filtervorrichtung stromaufwärts von einer Einmündung des Reingaskanals in den Reingas-Sammelkanal angeordnet ist.

Vorzugsweise sind alle Filtervorrichtungen der Vorrichtung zum Abtrennen von Lack-Overspray aus einem Overspray-Partikel enthaltenden Rohgasstrom mit einem solchen Sicherheitsfilter versehen, der stromaufwärts von der Einmündung des jeweiligen Reingaskanals der betreffenden Filtervorrichtung in den Reingas-Sammelkanal angeordnet ist.

Hierdurch ist gewährleistet, dass jeder einer solchen Filtervorrichtung zugeordnete Sicherheitsfilter im Falle eines Filterdurchbruchs an der betreffenden Filtervorrichtung nur den durch die betreffende Filtervorrichtung hindurchtretenden Anteil des Rohgasstroms filtern muss.

Hierdurch kann der Sicherheitsfilter jeder Filtervorrichtung relativ klein gehalten werden.

Vorzugsweise weist jede der mehreren Filtervorrichtungen der Vorrichtung zum Abtrennen von Lack-Overspray aus dem Overspray-Partikel enthaltenden Rohgasstrom einen eigenen Einlasskanal auf, durch welchen jeweils ein Anteil des Rohgasstroms der jeweiligen Filtervorrichtung zuführbar ist.

Vorzugsweise sind die Anteile des Rohgasstroms, welche den verschiedenen Filtervorrichtungen zugeführt werden, untereinander im Wesentlichen gleich groß, so dass auch die diesen Filtervorrichtungen zugeordneten Sicherheitsfilter aufgrund des im Wesentlichen einheitlichen Volumenstroms durch die verschiedenen Filtervorrichtungen im Wesentlichen gleich groß gestaltet werden können und somit die Größe der Sicherheitsfilter vereinheitlicht werden kann.

Hierdurch kann vorzugsweise für alle Filtervorrichtungen der Vorrichtung zum Abtrennen von Lack-Overspray aus dem Overspray-Partikel enthaltenden Rohgasstrom derselbe Typ von Sicherheitsfilter mit denselben Sicherheitsfilterelementen verwendet werden.

Bei einer bevorzugten Ausgestaltung der Erfindung ist vorgesehen, dass mindestens ein Sicherheitsfilter so an der Filtervorrichtung angeordnet ist, dass mindestens ein Filterelement aus der Filtervorrichtung entnehmbar ist, ohne zuvor den Sicherheitsfilter zu entnehmen. Auf diese Weise ist gewährleistet, dass durch die Integration des Sicherheitsfilters an der Filtervorrichtung die Montage und Demontage sowie die Wartung und Reparatur der Filterelemente der Filtervorrichtung nicht erschwert wird.

Vorzugsweise sind alle Sicherheitsfilter der Filtervorrichtung so an der Filtervorrichtung angeordnet, dass alle Filterelemente aus der Filtervorrichtung entnehmbar sind, ohne zuvor einen der Sicherheitsfilter zu entnehmen.

Grundsätzlich kann als Sicherheitsfilter jeder Typ von Filter verwendet werden, welcher dazu geeignet ist, die im Rohgasstrom mitgeführten Partikel auszufiltern und welcher dem Volumenstrom standhält, der im Falle eines Filterdurchbruchs durch den Sicherheitsfilter geleitet wird.

Vorzugsweise umfasst der Sicherheitsfilter mindestens einen Trockenfilter, also einen Filter, mit dem eine trockene Filtration durchführbar ist. Eine trockene Filtration ist eine Filtration des durch den Filter hindurchtretenden Gasstroms, die ohne Auswaschung mit einer Reinigungsflüssigkeit erfolgt. Dies schließt nicht aus, dass eine im Zuge der Filtration an dem Filter ausgebildete Schicht von auszufilterndem Material und gegebenenfalls Filterhilfsmaterial durch Beaufschlagung mit einem flüssigen Reinigungsmedium abgewaschen wird.

Vorzugsweise umfasst der Sicherheitsfilter ausschließlich Trockenfilter.

Eine trockene Filtration bietet den Vorteil, dass die Temperatur und die Feuchte des Gasstroms, der durch den Filter hindurchströmt, dabei zumindest annähernd konstant bleibt, so dass der durch den Filter hindurchtretende Gasstrom nach dem Filterdurchtritt nicht zusätzlich hinsichtlich seiner Temperatur und/oder seiner Feuchte konditioniert werden muss.

Der Sicherheitsfilter kann beispielsweise einen Prallfilter, einen Taschenfilter, einen Schlauchfilter, einen Mattenfilter, einen Plattenfilter und/oder einen Röhrenfilter umfassen.

Der Sicherheitsfilter kann permanent im Strömungsweg des Reingasstroms angeordnet und für die Filtrierung der durch den Sicherheitsfilter hindurchströmenden Gasströmung aktiv sein.

Alternativ oder ergänzend hierzu kann vorgesehen sein, dass mindestens ein Sicherheitsfilter im Falle eines Filterdurchbruchs an einem Filterelement für die Filtration von durch das Filterelement gelangendem Rohgas aktivierbar ist. Dies bietet den Vorteil, dass der betreffende Sicherheitsfilter nicht das bereits von den Filterelementen des Hauptfilters gefilterte Reingas nochmals filtert, sondern erst im Fall eines Filterdurchbruchs an mindestens einem der Filterelemente der Filtervorrichtung für die dann erforderlich werdende Filtrierung des durch den Hauptfilter hindurchgelangenden Rohgases aktiviert oder zugeschaltet wird. Hierdurch wird eine unnötige Erhöhung des Strömungswiderstands auf der Reingasseite der Filtervorrichtung im normalen Betriebszustand der Filtervorrichtung vermieden.

Eine solche Aktivierung eines Sicherheitsfilters im Falle eines Filterdurchbruchs kann beispielsweise dadurch erfolgen, dass mindestens ein Sicherheitsfilter mindestens ein Sicherheitsfilterelement umfasst, das im normalen Betriebszustand der Filtervorrichtung in einer Wartestellung außerhalb des Strömungswegs des Reingases angeordnet ist und, mittels einer geeigneten Bewegungsvorrichtung, im Falle eines Filterdurchbruchs in eine Arbeitsstellung im Strömungsweg des durch den Hauptfilter der Filtervorrichtung gelangenden Rohgases einbringbar ist.

Vorzugsweise weist dabei die Bewegungsvorrichtung einen motorischen Antrieb für die Bewegung des mindestens einen Sicherheitsfilterelements auf.

Über eine mechanische Bewegungsvorrichtung im Falle eines Filterdurchbruchs in den Strömungsweg einbringbare Sicherheitsfilterelemente können beispielsweise als eine Filterplatte, ein Taschenfilter oder ein Prallfilter ausgebildet sein.

Alternativ oder ergänzend hierzu kann ein Sicherheitsfilter auch dadurch aktivierbar sein, dass es mindestens ein Sicherheitsfilterelement umfasst, welches im normalen Betriebszustand der Filtervorrichtung für das gefilterte Reingas im Wesentlichen durchlässig ist und erst im Falle eines Filterdurchbruchs (vorzugsweise automatisch) mit einem geeigneten Filtermaterial befüllt wird.

Beispielsweise kann ein solches Sicherheitsfilterelement eine Filtermaterialaufnahme, insbesondere in Form eines Netzes oder Gitters, umfassen, die im Falle eines Filterdurchbruchs mit Filtermaterial aus einem Filtermaterial-Reservoir, beispielsweise mit einer Schüttung aus Filtermaterialpartikeln, gefüllt wird.

Ein geeignetes Filtermaterial zur Befüllung eines solchen Sicherheitsfilterelements im Falle eines Filterdurchbruchs ist beispielsweise Kies, Sand, Eisenspäne oder dergleichen.

Alternativ oder ergänzend hierzu kann ein Sicherheitsfilter auch dadurch im Falle eines Filterdurchbruchs aktivierbar sein, dass es mindestens ein Sicherheitsfilterelement umfasst, das im Falle eines Filterdurchbruchs durch Anlegen einer elektrischen Spannung aktivierbar ist.

Ein solches Sicherheitsfilterelement kann insbesondere als ein elektrostatischer Filter ausgebildet sein.

Um bei Verwendung eines erst im Schadensfall aktivierbaren Sicherheitsfilters den Sicherheitsfilter rechtzeitig aktivieren zu können oder im Fall eines permanent aktiven Sicherheitsfilters das Bedienungspersonal der Lackieranlage alarmieren und/oder ermitteln zu können, über welchen Zeitraum der Sicherheitsfilter mit auf die Reingasseite der Filtervorrichtung gelangtem Rohgas belastet wird, ist es von Vorteil, wenn die Filtervorrichtung mindestens eine Detektionsvorrichtung zum Detektieren eines Filterdurchbruchs an einem Filterelement umfasst.

Eine solche Detektionsvorrichtung kann beispielsweise einen Partikelzähler, einen Druckverlustmesser, einen Filterwiderstandsmesser zur Messung des Durchgangswiderstands mindestens eines Filterelements des Hauptfilters und/oder einen Filterwiderstandsmesser zur Messung des Durchgangswiderstands mindestens eines Sicherheitsfilters umfassen.

Bei der Erfindung ist ferner vorgesehen, dass zur Filtrierung des Rohgasstroms ein Filterhilfsmaterial verwendet wird und dass mindestens ein Filterelement der Filtervorrichtung im Betrieb der Filtervorrichtung mit einer Sperrschicht, die ein Filterhilfsmaterial enthält, versehen ist.

Hierdurch wird insbesondere bei Verwendung eines Fluidlacks verhindert, dass der feuchte Fluidlack-Overspray direkt auf die Oberfläche des Filterelements gelangt. Vielmehr wird der Fluidlack-Overspray durch das Filterhilfsmaterial gebunden und/oder bildet das Filterhilfsmaterial eine Sperrschicht zwischen dem nassen Fluidlack-Overspray und der Filteroberfläche.

Mit dem Begriff "Fluidlack" wird in dieser Beschreibung - im Unterschied zum Begriff "Pulverlack" - ein Lack mit einer fließfähigen Konsistenz, von flüssig bis pastös (beispielsweise im Falle eines PVC-Lacks), bezeichnet. Der Begriff "Fluidlack" umfasst insbesondere die Begriffe "Flüssiglack" und "Nasslack".

Als Filterhilfsmaterial kommt insbesondere Kalk, Steinmehl, ein Aluminiumsilikat, ein Aluminiumoxid, ein Siliziumoxid, Pulverlack oder ähnliches,in Betracht.

Die vorliegende Erfindung betrifft ferner ein Verfahren zum Abtrennen von Lack-Overspray aus einem Overspray-Partikel enthaltenden Rohgasstrom, welches folgende Verfahrensschritte umfasst:
- Zuführen zumindest eines Teils des Rohgasstroms zu mindestens einem Filterelement, mittels welchem der zugeführte Rohgasstrom gefiltert wird; und
- Zuführen des mittels des Filterelements gefilterten Rohgasstroms als Reingasstrom zu einer Reingaskammer.

Der vorliegenden Erfindung liegt die weitere Aufgabe zugrunde, ein solches Verfahren zum Abtrennen von Lack-Overspray aus einem Overspray-Partikel enthaltenden Rohgasstrom zu schaffen, bei dem im Falle eines Filterdurchbruchs an mindesten einem Filterelement der Filtervorrichtung eine Verschmutzung der Reingasseite der Filtervorrichtung und der stromabwärts von der Filtervorrichtung liegenden Bereiche einer die Filtervorrichtung enthaltenden Lackieranlage so gering wie möglich gehalten wird.

Diese Aufgabe wird durch ein Verfahren zum Abtrennen von Lack-Overspray aus einem Overspray-Partikel enthaltenden Rohgasstrom nach Anspruch 13 gelöst.

Die erfindungsgemäße Filtervorrichtung eignet sich insbesondere zur Durchführung des erfindungsgemäßen Verfahrens zum Abtrennen von Lack-Overspray aus einem Overspray-Partikel enthaltenden Rohgasstrom.

Durch die erfindungsgemäße Filtervorrichtung und das erfindungsgemäße Verfahren wird die Länge des im Falle eines Filterdurchbruchs verschmutzten Abschnitts des Gasströmungswegs zwischen der Reingaskammer und dem Sicherheitsfilter minimiert.

Vorzugsweise sind zwischen dem Filterelement des Hauptfilters und dem Sicherheitsfilter keine Maschinenteile angeordnet, welche im Falle eines Filterdurchbruchs verschmutzt werden können.

Der Sicherheitsfilter, welcher der Reingaskammer einer einzelnen Filtervorrichtung zugeordnet ist, kann eine geringere Größe aufweisen als ein Sicherheitsfilter, der in einem Reingas-Sammelkanal oder in einem Sammel-Umluftkanal angeordnet wäre.

Der Sicherheitsfilter ermöglicht eine sichere Trockenabscheidung von Partikeln aus dem Rohgas im Falle eines Filterdurchbruchs bei nur geringem zusätzlichen Platzbedarf.

Bei einem Umbau einer bestehenden Lackieranlage kann der der Reingaskammer einer einzelnen Filtervorrichtung zugeordnete Sicherheitsfilter leicht hinzugefügt werden; es fällt dadurch kein zusätzlicher Platzbedarf für einen Sicherheitsfilter in einem Reingas-Sammelkanal oder in einem Sammelumluftkanal an.

Der Sicherheitsfilter kann in jeder denkbaren Position nach der Filteraufnahme positioniert sein. Insbesondere kann er noch in der Reingaskammer, über der Reingaskammer, unter der Reingaskammer oder horizontal nach der Reingaskammer angeordnet sein.

Der Sicherheitsfilter kann so angeordnet sein, dass er den Ausbau der Filterelemente des Hauptfilters der Filtervorrichtung nicht beeinträchtigt.

Eine entsprechend geformte Aufnahme des Sicherheitsfilters ermöglicht einen einfachen Ein- und Ausbau des Sicherheitsfilters und eine einfache Zugänglichkeit des Sicherheitsfilters für Wartungszwecke.

Dies kann beispielsweise dadurch ermöglicht werden, dass der Sicherheitsfilter senkrecht zur Anströmrichtung aus einem Rahmen herausziehbar ist.

Alternativ oder ergänzend hierzu kann auch vorgesehen sein, dass der Sicherheitsfilter mitsamt dem Rahmen aus dem Strömungsweg der Gasströmung, insbesondere aus einem Kanalgewerk, herausziehbar ist.

Der Sicherheitsfilter kann beispielsweise ein F5-Taschenfilter umfassen.

Der Sicherheitsfilter kann mit einer Überwachung ausgerüstet sein, die registriert, wann der Sicherheitsfilter zum Beispiel einen höheren Durchtrittswiderstand aufweist. Auf diese Weise kann ein Filterbruch indirekt registriert werden, da der Durchtrittswiderstand des Sicherheitsfilters dann ansteigt, wenn sich Partikel aus dem im Falle eines Filterdurchbruchs auf die Reingasseite der Filtervorrichtung gelangenden Rohgas an dem Sicherheitsfilter abscheiden.

Eine Filterbelegungsdetektion an dem Sicherheitsfilter kann auch mit einer Partikelemissionsmessung kombiniert werden; auf diese Weise kann ein Durchbruch am Hauptfilter der Filtervorrichtung frühzeitig erkannt werden.

Eine Partikelemissionsmessung kann auch eigenständig, dass heißt ohne zusätzliche Filterwiderstandsmessung, zur Detektion eines Filterdurchbruchs verwendet werden.

Der Sicherheitsfilter kann permanent aktiv oder aber im Falle eines Durchbruchs am Hauptfilter der Filtervorrichtung aktivierbar sein.

Die Detektion eines Schadens am Hauptfilter kann beispielsweise durch einen Partikelzähler, durch eine Veränderung des Druckverlusts über den Hauptfilter und/oder durch Änderungen des Widerstands der Filterelemente des Hauptfilters beim Abreinigen mittels Druckluft detektiert werden.

Bei Detektion eines Filterdurchbruchs kann die Sicherheitsfilterstufe zugeschaltet werden. Dies minimiert den notwendigen Druckverlust während des Normalbetriebs der Filtervorrichtung und gewährleistet gleichzeitig die notwendige Sicherheit gegen Verschmutzung im Falle eines Filterdurchbruchs.

Der Sicherheitsfilter der erfindungsgemäßen Filtervorrichtung ist ortsnah zu den Filterelementen des Hauptfilters angeordnet.

Vorzugsweise kommen zwischen dem Hauptfilter und dem dem Hauptfilter zugeordneten Sicherheitsfilter keine weiteren Reingasströme hinzu, so dass das Sicherheitsfilter nur auf den Teilgasstrom abgestimmt werden muss, welcher durch die jeweils zugeordnete Filtervorrichtung hindurchtritt.

Die Gaskanalstrecke zwischen der Bruchstelle und dem Sicherheitsfilter, welche im Falle eines Filterdurchbruchs durch Partikel aus dem Rohgasstrom verschmutzt wird, wird dadurch gering gehalten, dass der Sicherheitsfilter benachbart zu dem mindestens einen Filterelement des Hauptfilters der Filtervorrichtung angeordnet ist.

Vorzugsweise sind zwischen dem mindestens einen Filterelement des Hauptfilters und dem zugeordneten Sicherheitsfilter keine Ventilatoren, Sensoren oder Konditoniervorrichtungen (wie beispielsweise Kühler und/oder Befeuchter) im Strömungsweg der Gasströmung angeordnet.

Weitere Merkmale und Vorteile der Erfindung sind Gegenstand der nachfolgenden Beschreibung und der zeichnerischen Darstellung von Ausführungsbeispielen.

In den Zeichnungen zeigen:

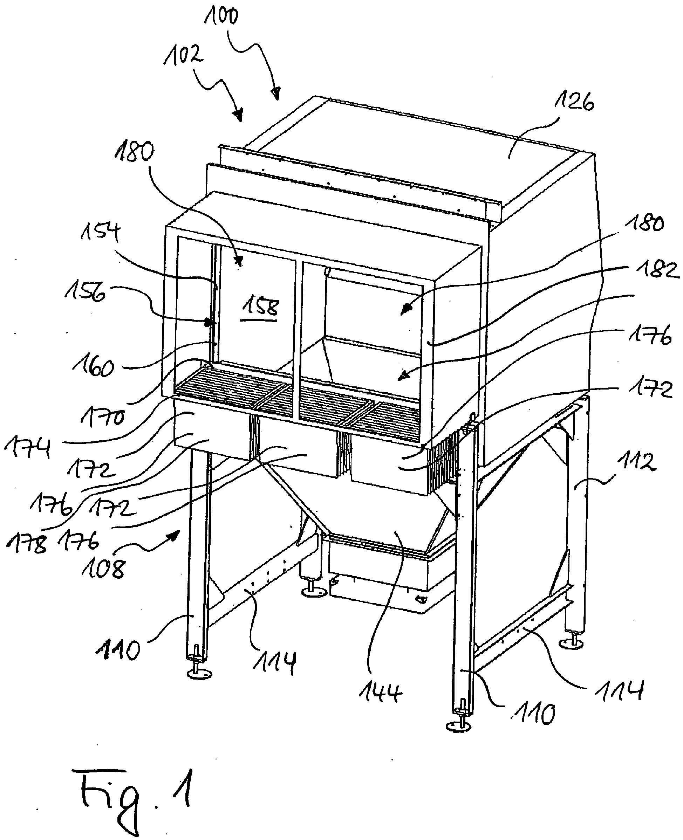

- Fig. 1: eine schematische perspektivische Darstellung eines Filtermoduls einer Vorrichtung zum Abtrennen von Fluidlack-Overspray aus einem Overspray-Partikel enthaltenden Rohgasstrom, wobei das Filtermodul eine Reingaskammer und einen der Reingaskammer des Filtermoduls zugeordneten Sicherheitsfilter umfasst;

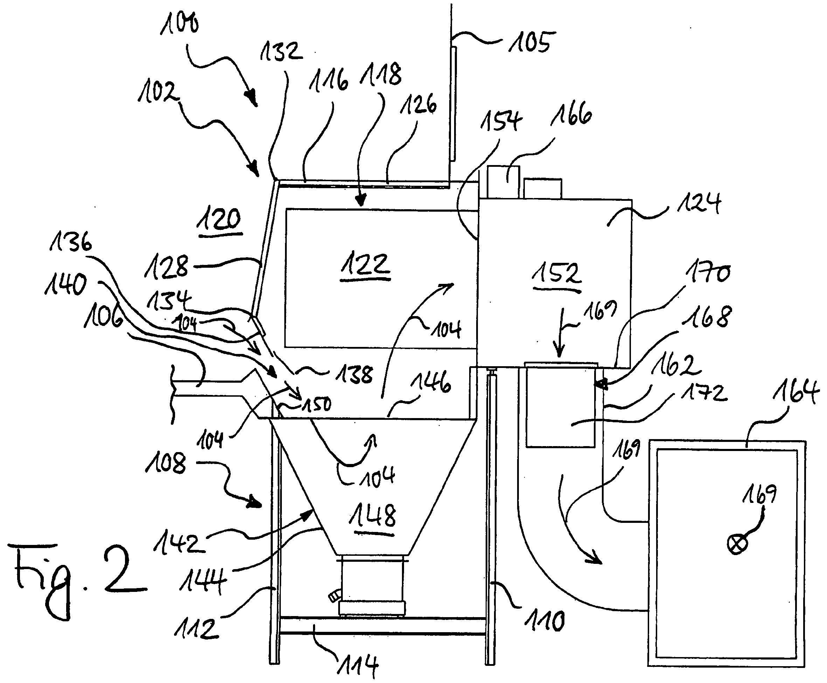

- Fig. 2: einen schematischen vertikalen Schnitt durch das Filtermodul aus Fig. 1 mit dem Sicherheitsfilter, einen Reingas-Sammelkanal und einen die Reingaskammer des Filtermoduls mit dem Abgas-Sammelkanal verbindenden Reingaskanal;

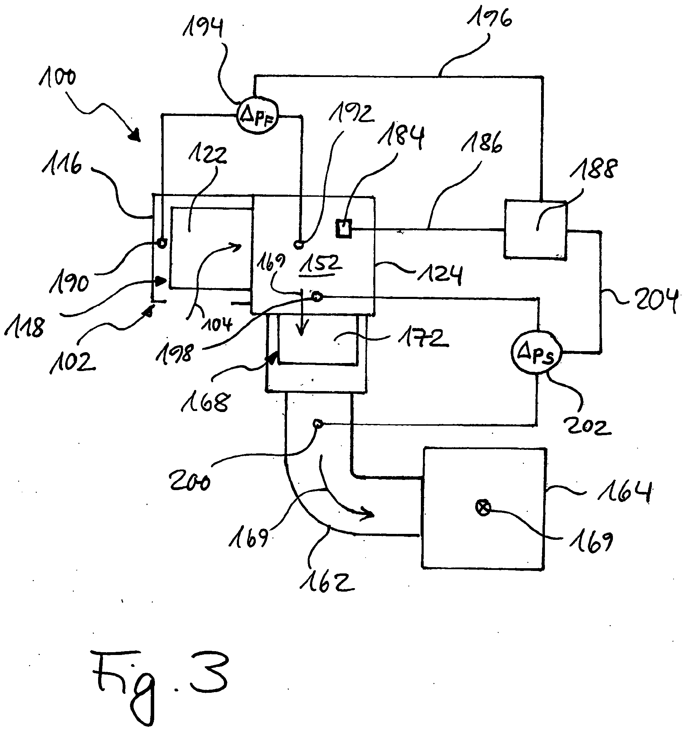

- Fig. 3: eine-schematische Darstellung eines Filtermoduls mit Sicherheitsfilter, wobei der Sicherheitsfilter permanent im Strömungsweg des Reingases angeordnet ist und ein Filterdurchbruch an einem Filterelement des Filtermoduls mittels eines Partikelzählers und/oder mittels Druckdifferenzmessungen detektiert wird;

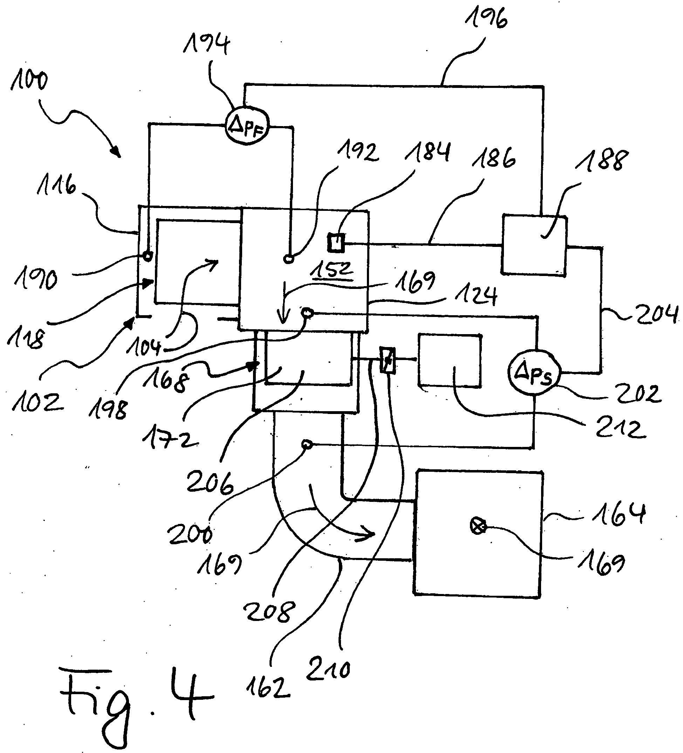

- Fig. 4: eine der Fig. 3 entsprechende schematische Darstellung eines Filtermoduls mit Sicherheitsfilter, wobei der Sicherheitsfilter im Normalbetrieb des Filtermoduls kein Filtermaterial enthält und mit einem Filtermaterial-Reservoir verbunden ist, aus welchem im Falle eines Filterdurchbruchs an einem Filterelement des Filtermoduls ein Filtermaterial dem Sicherheitsfilter zuführbar ist;

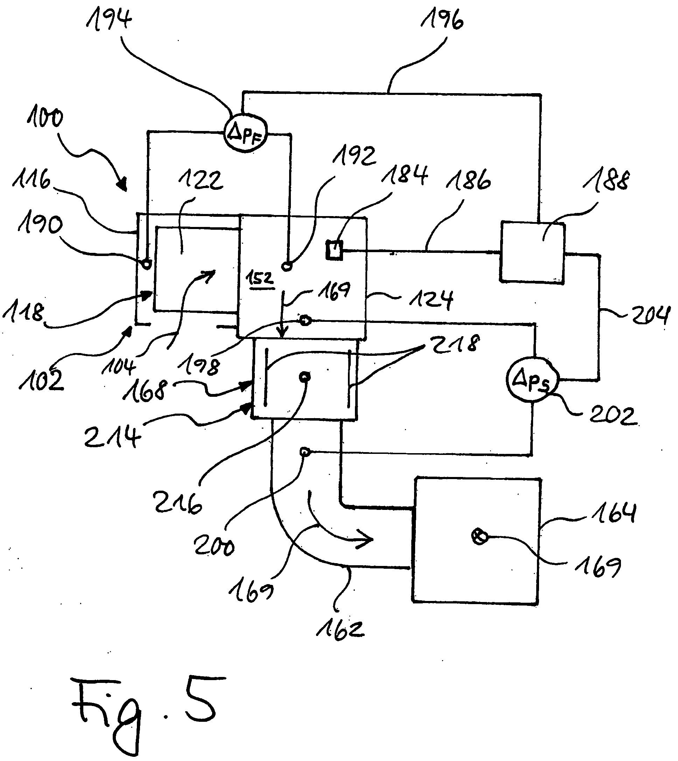

- Fig. 5: eine den Fig. 3 und 4 entsprechende schematische Darstellung eines Filtermoduls mit Sicherheitsfilter, wobei der Sicherheitsfilter als ein im Falle eines Filterdurchbruchs an einem Filterelement des Filtermoduls zuschaltbarer elektrostatischer Filter ausgebildet ist;

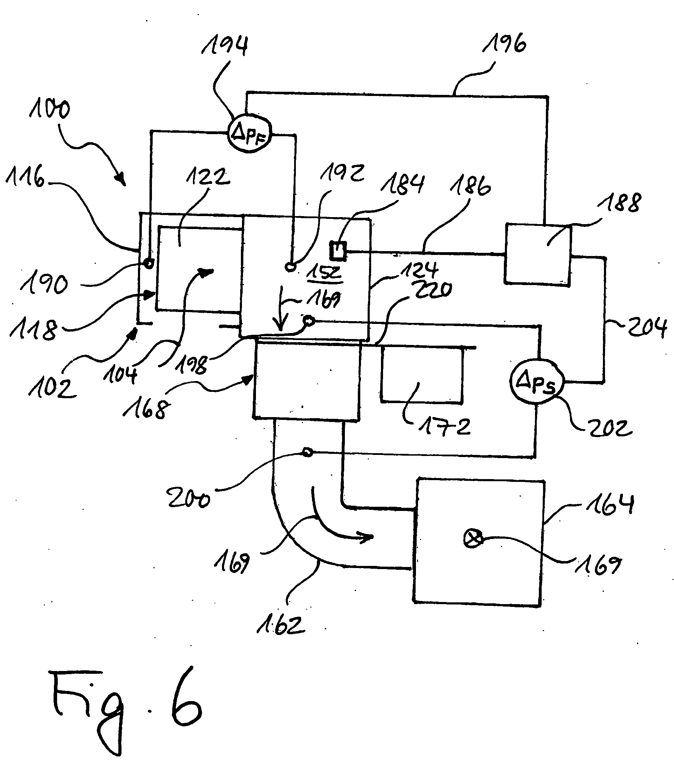

- Fig. 6: eine den Fig. 3 bis 5 entsprechende schematische Darstellung eines Filtermoduls mit Sicherheitsfilter, wobei der Sicherheitsfilter im Normalbetrieb des Filtermoduls außerhalb des Strömungswegs des Reingasstroms angeordnet ist und im Falle eines Filterdurchbruchs an einem Filterelement des Filtermoduls mittels einer Bewegungsvorrichtung in den Strömungsweg der Gasströmung einbringbar ist, wobei der Sicherheitsfilter in einer Ruhestellung dargestellt ist, welche der Sicherheitsfilter im Normalbetrieb des Filtermoduls einnimmt; und

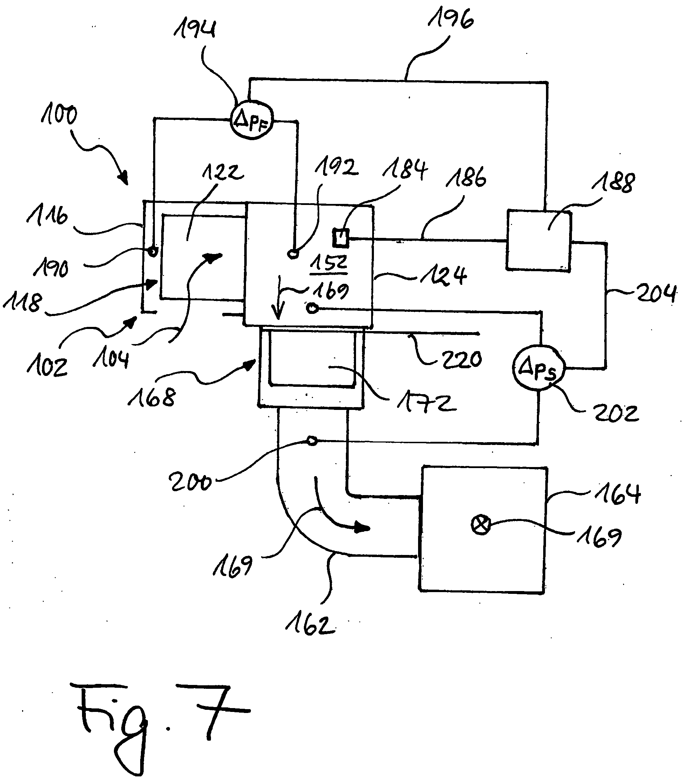

- Fig. 7: eine der Fig. 6 entsprechende schematische Darstellung des Filtermoduls mit dem in den Strömungsweg einbringbaren Sicherheitsfilter, wobei der Sicherheitsfilter in einer Arbeitsstellung dargestellt ist, welche der Sicherheitsfilter im Falle eines Filterdurchbruchs an einem Filterelement des Filtermoduls einnimmt.

Gleiche oder funktional äquivalente Elemente sind in allen Figuren mit denselben Bezugszeichen bezeichnet.

Eine in den Fig. 1 bis 3 dargestellte, als Ganzes mit 100 bezeichnete Vorrichtung zum Abtrennen von Fluidlack-Overspray aus einem Rohgasstrom umfasst ein oder mehrere, in der vorstehenden Beschreibung auch als Filtervorrichtungen bezeichnete Filtermodule 102, von denen in den Fig. 1 bis 3 eines dargestellt ist.

Die Vorrichtung 100 zum Abtrennen von Fluidlack-Overspray bildet einen Bestandteil einer Lackieranlage zum Spritzlackieren von Werkstücken, beispielsweise von Fahrzeugkarosserien, die durch einen Applikationsbereich der Lackieranlage bewegt werden und im Applikationsbereich mittels (nicht dargestellter) Spritzlackiereinrichtungen, beispielsweise in Form von Lackierrobotern, lackiert werden.

Mittels eines Umluftkreislaufs wird ein Luftstrom erzeugt, welcher den Applikationsbereich durchsetzt und Lack-Overspray in Form von Overspray-Partikeln aufnimmt. Der Begriff "Partikel" umfasst dabei sowohl feste als auch flüssige Teilchen, insbesondere Tröpfchen.

Bei Verwendung von Fluidlack besteht der Fluidlack-Overspray aus Lacktröpfchen. Die meisten der Overspray-Partikel weisen eine größte Abmessung im Bereich von ungefähr 1 µm bis ungefähr 100 µm auf.

Der mit den Overspray-Partikeln aus dem Applikationsbereich beladene Abluftstrom wird im Folgenden als Rohgasstrom 104 bezeichnet. Die Strömungsrichtung des Rohgasstroms ist in den Fig. 2 und 3 durch mit 104 bezeichnete Pfeile dargestellt.

Der Rohgasstrom 104 gelangt aus dem Applikationsbereich in die Vorrichtung 100 zum Abtrennen von Fluidlack-Overspray aus dem Rohgasstrom, welche vorzugsweise unterhalb des Applikationsbereichs angeordnet ist.

Die Filtermodule 102 der Vorrichtung 100 können insbesondere in zwei Modulreihen auf den beiden einander gegenüberliegenden Seiten einer Strömungskammer, von der in Fig. 2 eine vertikale Seitenwand 105 dargestellt ist, angeordnet sein.

Zwischen den beiden Modulreihen kann ein von einer Bedienungsperson begehbarer Steg 106 vorgesehen sein (siehe Fig. 2).

Jedes der Filtermodule 102 ist vorzugsweise als eine vormontierte Einheit ausgebildet, die an einem vom Montageort der Lackieranlage und der Vorrichtung 100 zum Abtrennen von Fluidlack-Overspray entfernten Ort hergestellt und als Einheit zum Montageort der Lackieranlage transportiert wird. Am Montageort wird die vormontierte Einheit in der vorgesehenen Arbeitsposition angeordnet und mit einer oder mehreren benachbarten vormontierten Einheiten sowie mit einer Tragkonstruktion des Applikationsbereichs verbunden.

Jedes Filtermodul umfasst eine Tragekonstruktion 108 aus zwei vertikalen hinteren Stützen 110 und zwei vertikalen vorderen Stützen 112, welche über horizontale Querstreben 114 mit jeweils einer der hinteren Stützen 110 verbunden sind.

Ferner sind die vorderen Stützen 112 und die hinteren Stützen 110 an ihren oberen Enden mittels jeweils einer (nicht dargestellten) horizontalen Querstrebe miteinander verbunden.

Das Filtermodul 132 umfasst ferner eine Einhausung 116, welche einen innerhalb der Einhausung 116 angeordneten Filterelementaufnahmeraum 118 des Filtermoduls 102 von einem außerhalb der Einhausung 116 befindlichen Bereich 120 der Strömungskammer trennt.

In dem Filterelementaufnahmeraum 118 des Filtermoduls 132 sind mehrere Filterelemente 122 angeordnet, welche von einer Reingaskammer 124, die an der Tragekonstruktion 108 gehalten ist, in horizontaler Richtung abstehen.

Die Filterelemente 122 können beispielsweise als Platten aus gesintertem Polyethylen, die an ihrer Außenfläche mit einer Membran aus Polytetrafluorethylen (PTFE) versehen sind, ausgebildet sein.

Die Membran aus PTFE dient dazu, die Filterklasse der Filterelemente 122 zu erhöhen (das heißt deren Durchlässigkeit zu verringern) und ferner das permanente Anhaften des aus dem Rohgasstrom 104 abgetrennten Fluidlack-Oversprays an der Oberfläche der Filterelemente 122 zu verhindern.

Die Membran der Filterelemente 122 enthält ferner vorzugsweise einen elektrisch leitfähigen Bestandteil, beispielsweise Graphit, um eine Ableitung elektrostatischer Ladungen von den Filterelementen 122 und antistatische Eigenschaften der Filterelemente 122 zu gewährleisten.

Sowohl das Grundmaterial der Filterelemente 122 als auch deren PTFE-Membran weisen eine Porosität auf, so dass das Rohgas durch die Poren in den Innenraum des jeweiligen Filterelements 122 und von dort in die Reingaskammer 124 gelangen kann.

Um ein Verkleben der Filteroberflächen zu verhindern, sind dieselben ferner mit einer Sperrschicht versehen, welche in den Rohgasstrom 104 abgegebenes Filterhilfsmaterial enthält. Dieses vorzugsweise partikelförmige Filterhilfsmaterial wird üblicherweise auch als "Precoat"-Material bezeichnet.

Die Sperrschicht bildet sich im Betrieb der Vorrichtung 100 durch Abscheidung des in den Rohgasstrom 104 abgegebenen Filterhilfsmaterials an den Filteroberflächen und verhindert, dass die Filteroberflächen durch anhaftenden Fluidlack-Overspray verkleben.

Als Filterhilfsmaterial kann grundsätzlich jedes Medium verwendet werden, welches dazu in der Lage ist, den Flüssigkeitsanteil des Fluidlack-Ovesprays aufzunehmen und sich an Overspray-Partikeln anzulagern und damit denselben die Klebrigkeit zu nehmen.

Insbesondere kommen als Filterhilfsmaterialien beispielsweise Kalk, Steinmehl, ein Aluminiumsilikat, ein Aluminiumoxid, ein Siliziumoxid, Pulverlack oder ähnliches in Betracht.

Das Filterhilfsmaterial besteht vorzugsweise aus einer Vielzahl von Hilfsmaterial-Partikeln, welche einen mittleren Durchmesser im Bereich von beispielsweise ungefähr 10 µm bis ungefähr 100 µm aufweisen.

Wie aus Fig. 2 zu ersehen ist, umfasst die Einhausung 116 eine im Wesentlichen horizontale Deckenwand 126 und eine sich von einem vorderen Rand 132 der Deckenwand 126 aus nach unten erstreckende Vorderwand 128.

Die Vorderwand 128 der Einhausung 116 umfasst einen oberen Vorderwandabschnitt 130, der sich vom vorderen Rand 132 der Deckenwand 126 bis zu einer Vorderkante 134 der Vorderwand 128 erstreckt, und einen unteren Vorderwandabschnitt 136, der sich von der Vorderkante 134 nach unten bis zu einem unteren Vorderwandrand 138 erstreckt.

Der untere Vorderwandabschnitt 136 bildet eine obere Begrenzung eines Einlasskanals 140 des Filtermoduls 102, durch welchen ein Teil des Rohgasstroms 104 in das betreffende Filtermodul 102 eintritt.

Um das Filterhilfsmaterial dem Rohgasstrom 104 zugeben zu können, ohne dass die Gefahr besteht, dass das Filterhilfsmaterial in den Applikationsbereich der Lackieranlage gelangt, ist jedes Filtermodul 102 mit einem an der Tragekonstruktion 108 gehaltenen Hilfsmaterialaufnahmebehälter 142 versehen, welcher beispielsweise eine trichterförmige Gestalt in Form eines umgekehrten Pyramidenstumpfes aufweist (siehe die Fig. 1 und 2).

Die oberen Ränder der beispielsweise vier trapezförmigen Seitenwände 144 des Hilfsmaterialaufnahmebehälters 142 umschließen eine Zugangsöffnung 146 des Hilfsmaterialaufnahmebehälters 142, durch welche der mit Overspray beladene Rohgasstrom 104 in den Hilfsmaterialaufnahmebehälter 142 eintreten und aus demselben wieder entweichen kann.

Um die in das Filtermodul 102 eintretende Rohgasströmung gezielt in den Innenraum 148 des Hilfsmaterialaufnahmebehälters 142 hinein zu lenken und einen direkten Zutritt der Rohgasströmung aus der Strömungskammer zu den Filterelementen 122 hin zu verhindern, ist jedes Filtermodul 102 mit dem Einlasskanal 140 versehen, der nach oben hin durch den unteren Vorderwandabschnitt 136 der Einhausung 116 und nach unten hin durch eine Seitenwand 150 des begehbaren Steges 106 begrenzt wird.

Durch den kleinen Einlassquerschnitt und die deshalb hohe Strömungsgeschwindigkeit des Rohgasstroms 104 im Einlasskanal 140 wird wirksam verhindert, dass Filterhilfsmaterial aus dem Inneren des Filtermoduls 102, welches eine geschlossene Box bildet, in die Strömungskammer und von dort in den Applikationsbereich der Lackieranlage gelangt. Eine Aufwirbelung des Filterhilfsmaterials in dem Hilfsmaterialaufnahmebehälter 142 und eine Abreinigung der Filterelemente 122 können daher zu jedem beliebigen Zeitpunkt erfolgen, ohne die Zufuhr von Rohgas zum Filtermodul 102 oder gar den Betrieb der Spritzlackiereinrichtungen im Applikationsbereich unterbrechen zu müssen.

Ferner ist dadurch, dass der Rohgasstrom 104 in den Hilfsmaterialaufnahmebehälter 142 gerichtet aus dem Einlasskanal 140 austritt, gewährleistet, dass eine Umlenkung des Rohgasstroms 104 im Innenraum 148 des Hilfsmaterialaufnahmebehälters 142 erfolgt. Dadurch wird eine ausreichende Menge von Filterhilfsmaterial, die durch das Aufwirbeln von Filterhilfsmaterial mittels Druckluftpulsen aus einer (nicht dargestellten) Druckluftlanze aus der im Hilfsmaterialaufnahmebehälter 142 befindlichen Vorlage erzeugt wird, durch den Rohgasstrom 104 mitgerissen und aus dem Hilfsmaterialaufnahmebehälter 142 heraus zu den Filterelementen 102 getragen.

Das vom Rohgasstrom 104 mitgeführte Filterhilfsmaterial und der vom Rohgasstrom 104 mitgeführte Fluidlack-Overspray werden an den Filteroberflächen der Filterelemente 122 abgeschieden, und das mittels der Filterelemente 122 gefilterte Rohgas gelangt als Reingas durch die porösen Filteroberflächen in die Innenräume der Filterelemente 122, die in Fluidverbindung mit dem Innenraum 152 der Reingaskammer 152 stehen.

Wie am Besten aus Fig. 1 zu ersehen ist, in welcher die Filterelemente 122 des Filtermoduls 102 nicht dargestellt sind, ist an der dem Filterelementaufnahmeraum 118 des Filtermoduls 102 zugewandten Vorderseite 154 der Reingaskammer 124 eine Filterelementaufnahme 156 ausgebildet, welche eine Aufnahmeöffnung 158 und eine Filterelementhalterung 160 umfasst, so dass die Filterelemente 122 an der Filterelementhalterung 160 gehaltert werden können und sich von dort durch die Aufnahmeöffnung 158 in den Filterelementaufnahmeraum 118 hinein erstrecken.

In der Reingaskammer 124 wird das gefilterte Reingas aus allen Filterelementen 122 desselben Filtermoduls 102 gesammelt.

Wie am Besten aus Fig. 2 zu ersehen ist, gelangt dieses gesammelte Reingas durch einen oder mehrere Reingaskanäle 162 zu einem außerhalb der Strömungskammer angeordneten Reingas-Sammelkanal 164.

In jeden der beiderseits der Strömungskammer angeordneten Reingas-Sammelkanäle 164 münden jeweils die Reingaskanäle 162 der Filtermodule 102 einer der beiden Modulreihen aus jeweils mehreren Filtermodulen 122, welche auf den einander gegenüberliegenden Seiten der Strömungskammer angeordnet sind.

Aus den beiderseits der Strömungskammer angeordneten Reingas-Sammelkanälen 164 gelangt das von dem Fluidlack-Overspray gereinigte Reingas zu einem (nicht dargestellten) Abluftgebläse, von wo das Reingas über ein (nicht dargestelltes) Kühlregister und eine (nicht dargestellte) Zuführleitung einer oberhalb des Applikationsbereichs angeordneten (nicht dargestellten) Luftkammer, dem sogenannten Plenum, zugeführt wird.

Von dieser Luftkammer gelangt die gereinigte Abluft als Reingas über eine Filterdecke in den Applikationsbereich zurück, wodurch der Umluftkreislauf durch die Lackieranlage geschlossen ist.

Da die Abtrennung des Fluidlack-Oversprays aus dem Rohgasstrom 104 mittels der Filterelemente 122 trocken, das heißt ohne Auswaschung mit einer Reinigungsflüssigkeit, erfolgt, wird die im Umluftkreislauf geführte Luft beim Abtrennen des Fluidlack-Oversprays nicht befeuchtet, so dass auch keinerlei Vorrichtungen zur Entfeuchtung der im Umluftkreislauf geführten Luft erforderlich sind. Ferner sind auch keine Vorrichtungen zum Abtrennen von Fluidlack-Overspray aus einer Auswasch-Reinigungsflüssigkeit erforderlich.

Die Filterelemente 122 werden in bestimmten Zeitintervallen, wenn ihre Beladung mit Fluidlack-Overspray und Filterhilfsmaterial ein vorgegebenes Maß erreicht hat, durch Druckluftimpulse abgereinigt.

Die erforderlichen Druckluftimpulse werden mittels einer Abpulseinheit 166, die an der Reingaskammer 124 jedes Filtermoduls 102 angeordnet ist, erzeugt. Die erzeugten Druckluftimpulse gelangen vom Innenraum 152 der Reingaskammer 124 in die Innenräume der Filterelemente 122 und von dort durch die porösen Filteroberflächen in den Filterelementaufnahmeraum 118 des jeweiligen Filtermoduls 102, wobei die an den Filteroberflächen gebildete Sperrschicht aus Filterhilfsmaterial und dem daran abgeschiedenen Fluidlack-Overspray von den Filteroberflächen abgelöst wird, so dass die Filteroberflächen in ihren abgereinigten Ursprungszustand zurückversetzt werden.

Das abgereinigte Gemisch aus Filterhilfsmaterial und Fluidlack-Overspray fällt nach unten in den Hilfsmaterialaufnahmebehälter 142, von wo es in den Rohgasstrom 104 gelangt und von diesem wieder zu den Filterelementen 122 getragen wird.

Wenn der Anteil des Lack-Oversprays an dem Gemisch im Hilfsmaterialaufnahmebehälter 142 einen oberen Schwellenwert erreicht hat, wird das Gemisch aus Filterhilfsmaterial und Lack-Overspray aus dem Hilfsmaterialaufnahmebehälter 142 abgesaugt und durch frisches Filterhilfsmaterial ersetzt.

Wie am Besten aus den Fig. 2 und 3 zu ersehen ist, ist der Reingaskammer 124 jedes Filtermoduls 102 jeweils ein Sicherheitsfilter 168 zugeordnet. Der Sicherheitsfilter 168 ist im Strömungsweg des Reingases stromabwärts von den Filterelementen 122 des Filtermoduls 102 angeordnet. Dieser Strömungsweg ist in den Fig. 2 und 3 durch die Pfeile 169 angezeigt.

Der Sicherheitsfilter 168 dient dazu, im Falle eines Filterdurchbruchs an mindestens einem der Filterelemente 122 (das heißt im Falle einer mechanischen Verletzung des betreffenden Filterelements 122, durch welche ungefiltertes, noch mit Fluidlack-Overspray und mit Filterhilfsmaterial beladenes Rohgas aus dem Filterelementaufnahmeraum 118 auf die Reinseite der Filterelemente 122 übertreten und von dort in die Reingaskammer 124 gelangen kann) eine Filtration des auf die Reinseite gelangten Rohgases durchzuführen und auf diese Weise den auf die Reinseite gelangten Fluidlack-Overspray und das auf die Reinseite gelangte Filterhilfsmaterial aus dem auf die Reinseite gelangten Rohgas abzutrennen, so dass der Fluidlack-Overspray und das Filterhilfsmaterial nicht in die stromabwärts des Sicherheitsfilters 168 gelegenen Bereiche des Reingaskanals 162 und des Reingas-Sammelkanals 164 gelangen und diese Bereiche verschmutzen kann.

Insbesondere wird durch den Sicherheitsfilter 168 im Falle eines Filterdurchbruchs eine Verschmutzung .von Ventilatoren und Sensoren sowie von Luft-Konditioniereinrichtungen (insbesondere von Kühlern und/oder Befeuchtern) im Reingas-Sammelkanal 164 und in den stromabwärts vom Reingas-Sammelkanal 164 gelegenen Bereichen des Umluftkreislaufs verhindert.

Bei der in den Fig. 1 bis 3 dargestellten Ausführungsform ist der Sicherheitsfilter 168 permanent in den Strömungsweg 169 des Reingasstromes integriert, so dass der Sicherheitsfilter 168 im Normalbetrieb der Vorrichtung 100 zum Abtrennen von Fluidlack-Overspray von dem Reingasstrom durchströmt und der Reingasstrom von dem Sicherheitsfilter 168 nochmals gefiltert wird.

Bei dieser Ausführungsform kann der Sicherheitsfilter 168 beispielsweise ein oder mehrere Taschenfilter umfassen.

Hierbei kann es sich beispielsweise um F5-Taschenfilter handeln, welche einen Filter-Wirkungsgrad von 40 % bis 60 % bei Partikeln mit einem Durchmesser von 0,4 µm aufweisen.

Jedes Taschenfilter kann beispielsweise eine Durchtrittsfläche in der Größenordnung von ungefähr 600 mm x 600 mm aufweisen.

Alternativ zu einem Taschenfilter kann auch ein Schlauchfilter, ein Mattenfilter, ein Plattenfilter und/oder ein Röhrenfilter verwendet werden.

Grundsätzlich ist jede Art von Filter geeignet, welcher dem Volumenstrom standhält, der durch den Sicherheitsfilter 168 geleitet wird.

Vorzugsweise werden Trockenfilter verwendet, also solche Filter, mit denen eine trockene Filtration durchführbar ist, das heißt eine Filtration des durch den Filter hindurchtretenden Gasstroms, die ohne Auswaschung mit einer Reinigungsflüssigkeit erfolgt.

Eine solche trockene Filtration bietet den Vorteil, dass die Temperatur und die Feuchte des Gasstroms, der durch den Filter hindurchströmt, zumindest annähernd konstant bleibt, so dass der durch den Filter hindurchtretende Gasstrom nach dem Filterdurchtritt nicht zusätzlich hinsichtlich seiner Temperatur und/oder seiner Feuchte konditioniert werden muss.

Der Sicherheitsfilter 168 kann auch einfache Prallbleche umfassen, über deren Schikane sich das zu filtrierende Gut (insbesondere Fluidlack-Overspray und Filterhilfsmaterial) abscheiden kann.

Der Sicherheitsfilter 168 kann grundsätzlich in jeder denkbaren Position stromabwärts von der Filterelementaufnahme 156 positioniert sein.

Insbesondere kann der Sicherheitsfilter 168 im Innenraum 152 der Reingaskammer 124, über der Reingaskammer 124, unter der Reingaskammer 124 oder in horizontaler Richtung seitlich neben der Reingaskammer 124 angeordnet sein.

Vorzugsweise ist der Sicherheitsfilter 168 an einer oder mehreren Wänden der Reingaskammer 124 angeordnet.

Bei der in Fig. 1 dargestellten Ausführungsform ist der Sicherheitsfilter 168 an einer Bodenwand 170 der Reingaskammer 124 angeordnet.

In diesem Ausführungsbeispiel weist die Bodenwand 170 der Reingaskammer 124 für jedes Sicherheitsfilterelement 172 des Sicherheitsfilters 168 jeweils eine Aufnahmeöffnung auf, in welche das betreffende Sicherheitsfilterelement 172 so mit einem um das Sicherheitsfilterelement 172 umlaufenden Rahmen 174 eingehängt ist, dass der Rahmen 174 auf einer dem Innenraum 152 der Reingaskammer 124 zugewandten Innenseite der Bodenwand 170 der Reingaskammer 124 aufliegt und das Sicherheitsfilterelement 172 sich durch die Aufnahmeöffnung hindurch in den an die Reingaskammer 124 angrenzenden Bereich des Reingaskanals 162 hinein erstreckt.

Bei dem in Fig. 1 dargestellten Ausführungsbeispiel ist jedes der Sicherheitsfilterelemente 172 als ein Taschenfilter 176 ausgebildet, welches ein ziehharmonikaartig gefaltetes Filtermaterial 178 umfasst, dass an seinen oberen Rändern an dem Rahmen 174 des jeweiligen Taschenfilters 176 festgelegt ist.

Die Sicherheitsfilterelemente 172 können in einfacher Weise vertikal nach oben aus der jeweils zugeordneten Aufnahmeöffnung herausgehoben und durch eine Wartungsöffnung 180 aus der Reingaskammer 124 entnommen werden, um gegen ein anderes Sicherheitsfilterelement 172 ausgetauscht zu werden, was insbesondere dann erforderlich werden wird, wenn das betreffende Sicherheitsfilterelement 172 im Falle eines Filterdurchbruchs an einem der Filterelemente 122 für die Filtration von Rohgas in Anspruch genommen worden ist.

Eine oder mehrere Wartungsöffnungen 180 können beispielsweise an einer dem Filterelementaufnahmeraum 118 abgewandten Rückseite 182 der Reingaskammer 124 vorgesehen sein.

Während des Betriebs der Vorrichtung 100 zum Abtrennen von Fluidlack-Overspray ist eine solche Wartungsöffnung 180 vorzugsweise mittels einer Abdeckung oder einer Tür verschlossen.

Durch die Wartungsöffnung 180 können auch die Filterelemente 122, welche den Hauptfilter des Filtermoduls 102 bilden, aus dem Filtermodul 102 entnommen werden.

Dabei sind die Sicherheitsfilterelemente 172 so ausgebildet und an einer Begrenzungswand der Reingaskammer 124, insbesondere an deren Bodenwand 170, angeordnet, dass der Ausbau der Filterelemente 122 aus dem Filtermodul 102, insbesondere das Herausziehen der Filterelemente 122 in im wesentlicher horizontaler Richtung durch die Wartungsöffnungen 180, durch die Anwesenheit der Sicherheitsfilterelemente 172 nicht behindert wird.

Im Falle eines Filterdurchbruchs an einem der Filterelemente 122 sollte das beschädigte Filterelement 122 so bald wie möglich ausgetauscht werden, um eine Überlastung des nachgeschalteten Sicherheitsfilters 168 zu vermeiden.

Es ist daher günstig, wenn ein solcher Filterdurchbruch möglichst frühzeitig detektiert wird.

Ein Schaden am durch die Filterelemente 122 gebildeten Hauptfilter des Filtermoduls 102 kann beispielsweise mittels eines Partikelzählers 184 detektiert werden, der stromabwärts von den Filterelementen 122, beispielsweise im Innenraum 152 der Reingaskammer 124, angeordnet ist und über eine Signalleitung 186 mit einer Auswerteeinheit 188 verbunden ist. Ein solcher Partikelzähler spricht auf die Overspray-Partikel und/oder die Partikel des Filterhilfsmaterials an, welche im Fall eines Filterdurchbruchs auf die Reinseite der Filterelemente 122 gelangen.

Alternativ oder ergänzend hierzu kann ein Schaden am Hauptfilter dadurch ermittelt werden, dass eine Veränderung des Druckverlusts zwischen der Rohgasseite und der Reingasseite der Filterelemente 122 des Hauptfilters festgestellt wird.

Wie in Fig. 3 schematisch dargestellt, kann eine solche Differenzdruckmessung beispielsweise mittels eines im Filterelementaufnahmeraum 118 angeordneten ersten Drucksensors 190 und eines stromabwärts von den Filterelementen 122, beispielsweise im Innenraum 152 der Reingaskammer 124, angeordneten zweiten Drucksensors 192 erfolgen.

Ein mit den beiden Drucksensoren 190 und 192 verbundener Differenzdruckmesser 194 zur Ermittlung des Differenzdrucks Δp_{F} über die Filterelemente 122 hinweg kann ebenfalls über eine Signalleitung 196 mit der Auswerteeinheit 188 verbunden sein.

Eine Verringerung des Druckverlusts über die Filterelemente 122 zeigt einen Filterdurchbruch an mindestens einem der Filterelemente 122 an.

Die Drucksensoren 190 und 192 können auch dazu verwendet werden, eine Änderung des Durchgangswiderstands der Filterelemente 122 beim Abreinigen mittels der Druckluftimpulse der Abpulseinheit 166 zu detektieren, welche ebenfalls einen Filterdurchbruch an mindestens einem der Filterelemente 122 anzeigt.

Ferner ist es alternativ order ergänzend zu den vorstehend genannten Möglichkeiten auch möglich, einen Filterdurchbruch an mindestens einem der Filterelemente 122 dadurch zu detektieren, dass eine Änderung des Druckverlusts über den Sicherheitsfilter 168 hinweg festgestellt wird.

Zur Ermittlung des Druckverlusts Δpₛ über den Sicherheitsfilter 168 kann ein stromaufwärts von dem Sicherheitsfilter 168, beispielsweise im Innenraum 152 der Reingaskammer 124, angeordneter stromaufwärtiger Drucksensor 198 und ein stromabwärts von dem Sicherheitsfilter 168, beispielsweise im Reingaskanal 162, angeordneter stromabwärtiger Drucksensor 200 dienen.

Der stromaufwärtige Drucksensor 198 und der stromabwärtige Drucksensor 200 können an einen Differenzdruckmesser 202 angeschlossen sein, welcher seinerseits über eine Signalleitung 204 mit der Auswerteeinheit 188 verbunden sein kann.

Im Falle eines Filterdurchbruchs an einem der Filterelemente 122 des Hauptfilters steigt der Differenzdruck Δpₛ über den Sicherheitsfilter 168 an, da sich Fluidlack-Overspray und Filterhilfsmaterial, die auf die Reinseite der Filterelemente 122 gelangen, an der stromaufwärtigen Seite des Sicherheitsfilters 168 abscheiden, was den Durchgangswiderstand des Sicherheitsfilters 168 erhöht.

Die Auswerteeinheit 188 ermittelt aufgrund der übermittelten Signale des Partikelzählers 184, des Hauptfilter-Differenzdruckmessers 194 und/oder des Sicherheitsfilter-Differenzdruckmessers 202, ob ein Filterdurchbruch an mindestens einem der Filterelemente 122 vorliegt, und erzeugt im Falle eines Filterdurchbruchs ein Warnsignal oder eine Warnmeldung an das Bedienungspersonal der Lackieranlage, welches dann einen Austausch des defekten Filterelements 122 vornehmen kann.

Eine in Fig. 4 dargestellte zweite Ausführungsform einer Vorrichtung 100 zum Abtrennen von Fluidlack-Overspray unterscheidet sich von der in den Fig. 1 bis 3 dargestellten ersten Ausführungsform lediglich dadurch, dass der Sicherheitsfilter 168 bei der zweiten Ausführungsform nicht, wie bei der ersten Ausführungsform, permanent aktiv ist und das bereits von den Filterelementen 122 gefilterte Reingas nochmals im normalen Betriebszustand des Filtermoduls 102 filtert, sondern erst im Schadensfall, das heißt im Fall eines Filterdurchbruchs an mindestens einem der Filterelemente 122, aktiviert oder zugeschaltet wird.

Zu diesem Zweck umfasst der Sicherheitsfilter 168 bei dieser Ausführungsform mindestens ein Sicherheitsfilterelement 172, das seinerseits eine Filtermaterialaufnahme 206 umfasst, welche im Strömungsweg 169 des Reingases angeordnet ist, aber im normalen Betriebszustand des Filtermoduls 102 noch kein Filtermaterial enthält, so dass der Sicherheitsfilter 168 im normalen Betriebszustand des Filtermoduls 102 dem durchtretenden Reingas nur einen sehr geringen Widerstand entgegensetzt.

Die Filtermaterialaufnahme 206 ist über eine Filtermaterialzuführleitung 208, welche mittels einer Klappe 210 verschließbar ist, mit einem Filtermaterial-Reservoir 212 verbunden, welches im normalen Betriebszustand des Filtermoduls 102 mit einem geeigneten Filtermaterial, beispielsweise mit Kies, Sand, Eisenspänen oder dergleichen, befüllt ist.

Im normalen Betriebszustand des Filtermoduls 102 ist die Klappe 210 geschlossen, so dass das Filtermaterial nicht aus dem Filtermaterial-Reservoir 212 in die Filtermaterialaufnahme 206 gelangt.

Wenn jedoch die Auswerteeinheit 188 einen Filterdurchbruch an mindestens einem der Filterelemente 122 des Hauptfilters detektiert, wird der Sicherheitsfilter 168 aktiviert, indem (von einer nicht dargestellten Steuerungsvorrichtung der Vorrichtung 100 zum Abtrennen von Fluidlack-Overspray) die Klappe 210 geöffnet wird, worauf Filtermaterial aus dem Filtermaterial-Reservoir 212, vorzugsweise aufgrund der Schwerkraft, in die Filtermaterialaufnahme 206 gelangt.

Anschließend scheidet sich der Fluidlack-Overspray und das Hilfsmaterial aus dem auf die Reinseite der Filterelemente 122 gelangten Rohgas an dem in die Filtermaterialaufnahme 206 gelangten Filtermaterial des Sicherheitsfilters 168 ab, so dass der Sicherheitsfilter 168 seine Filtrationswirkung erfüllt.

Die Filtermaterialaufnahme 206 kann beispielsweise als ein grobmaschiges Netz ausgebildet sein, die im Fall eines Filterdurchbruchs mit einer Schüttung aus partikelförmigen Filtermaterial aus dem Filtermaterial-Reservoir 212 gefüllt wird.

Da der Sicherheitsfilter 168 bei dieser Ausführungsform erst für die Filtration der Gasströmung aktiviert wird, wenn ein Filterdurchbruch an mindestens einem der Filterelemente 122 des Filtermoduls 102 festgestellt worden ist, kann der Differenzdruck über das Sicherheitsfilter 168 hinweg (Δpₛ) bei dieser Ausführungsform nicht zur Detektion eines Filterdurchbruchs herangezogen werden; vielmehr muss der Filterdurchbruch in diesem Fall mittels des Partikelzählers 184 und/oder mittels des Differenzdrucks Δp_{F} über die Filterelemente 122 des Hauptfilters hinweg detektiert werden. Dennoch kann es auch bei dieser Ausführungsform sinnvoll sein, den Differenzdruck Δpₛ über den Sicherheitsfilter 168 hinweg nach dem Aktivieren des Sicherheitsfilters 168 zu überwachen, um die jeweilige Belastung des Sicherheitsfilters 168 mit aus dem auf die Reinseite der Filterelemente 122 gelangten Rohgas abgeschiedenen Fluidlack-Overspray und Filterhilfsmaterial feststellen und abschätzen zu können, wie lange noch der Sicherheitsfilter 168 ordnungsgemäß betrieben werden kann.

Im Übrigen stimmt die in Fig.4 dargestellte zweite Ausführungsform einer Vorrichtung 100 zum Abtrennen von Fluidlack-Overspray hinsichtlich Aufbau und Funktion mit der in der in den Fig. 1 bis 3 dargestellten ersten Ausführungsform überein, auf deren vorstehende Beschreibung insoweit Bezug genommen wird.

Eine in Fig. 5 dargestellte dritte Ausführungsform einer Vorrichtung 100 zum Abtrennen von Fluidlack-Overspray unterscheidet sich von der in Fig. 4 dargestellten zweiten Ausführungsform dadurch, dass der Sicherheitsfilter 168 nicht durch Befüllen mit einem Filtermaterial, sondern durch Anlegen einer elektrischen Spannung aktiviert wird, wenn ein Filterdurchbruch an mindestens einem der Filterelemente 122 des Filtermoduls 102 detektiert wird.

Der Sicherheitsfilter 168 ist bei dieser Ausführungsform nämlich als ein elektrostatischer Filter 214 ausgebildet, der eine Sprühelektrode 216 und eine oder mehrere Abscheideelektroden 218 umfasst.

Wird zwischen die Sprühelektrode 216 und die Abscheideelektroden 218 eine elektrische Spannung gelegt, so werden die Schmutzpartikel aus dem auf die Reinseite der Filterelemente 122 gelangten Rohgas im elektrischen Feld des Sicherheitsfilters 168 entgegengesetzt zur Polarität der Abscheideelektroden 218 aufgeladen, von den Abscheideelektroden 218 angezogen und dort abgeschieden.

Die elektrische Spannung wird an die Elektroden des Sicherheitsfilters 168 von der Steuerungsvorrichtung der Vorrichtung 100 zum Abtrennen von Fluidlack-Overspray angelegt, wenn die Auswerteeinheit 188 einen Filterdurchbruch an mindestens einem der Filterelemente 122 festgestellt hat.

Im normalen Betriebszustand des Filtermoduls 102, in dem keine Spannung an die Elektroden des Sicherheitsfilters 168 angelegt ist, setzt der Sicherheitsfilter 168 der Reingasströmung im Wesentlichen keinen Durchgangswiderstand entgegen.

Im Übrigen stimmt die in Fig. 5 dargestellte dritte Ausführungsform einer Vorrichtung 100 zum Abtrennen von Fluidlack-Overspray hinsichtlich Aufbau und Funktion mit der in Fig. 4 dargestellten zweiten Ausführungsform überein, auf deren vorstehende Beschreibung insoweit Bezug genommen wird.

Eine in den Fig. 6 und 7 dargestellte vierte Ausführungsform einer Vorrichtung 100 zum Abtrennen von Fluidlack-Overspray unterscheidet sich von der in Fig. 4 dargestellten zweiten Ausführungsform dadurch, dass der Sicherheitsfilter 168 nicht durch das Einfüllen von Filtermaterial in eine bereits im Strömungsweg 169 der Gasströmung befindliche Filtermaterialaufnahme 206 aktiviert wird, sondern vielmehr dadurch, dass ein oder mehrere Sicherheitsfilterelemente 172 mittels einer in den Fig. 6 und 7 rein schematisch dargestellten Bewegungsvorrichtung 220 im Falle eines Filterdurchbruchs an mindestens einem der Filterelemente 122 des Filtermoduls 102 erst in den Strömungsweg 169 der Gasströmung eingebracht werden.

In dem in Fig. 6 dargestellten normalen Betriebszustand des Filtermoduls 102 sind ein oder mehrere Sicherheitsfilterelemente 172 außerhalb des Strömungswegs der Reingasströmung in einer Wartestellung angeordnet, so dass der Reingasströmung im normalen Betriebszustand kein erhöhter Strömungswiderstand entgegengesetzt wird.

Wenn die Auswerteeinheit 188 einen Filterdurchbruch an mindestens einem der Filterelemente 122 detektiert hat, wird durch die Steuervorrichtung der Vorrichtung 100 zum Abtrennen von Fluidlack-Overspray die Bewegungsvorrichtung 220 so betätigt, dass das mindestens eine Sicherheitsfilterelement 172 von der Wartestellung außerhalb des Strömungsweges 169 der Gasströmung in die in Fig. 7 dargestellte Arbeitsstellung bewegt wird, in der sich die betreffenden Sicherheitsfilterelemente 172 im Strömungsweg 169 des auf die Reinseite der Filterelemente 122 gelangten Rohgases befinden und somit zur Abtrennung von Fluidlack-Overspray und Filterhilfsmaterial aus dieser Rohgasströmung wirksam sind.

Die beweglichen Sicherheitsfilterelemente 172 können beispielsweise als Filterplatten, Taschenfilter oder Prallfilter ausgebildet sein.

Im Übrigen stimmt die in den Fig. 6 und 7 dargestellte vierte Ausführungsform einer Vorrichtung 100 zum Abtrennen von Fluidlack-Overspray hinsichtlich Aufbau und Funktion mit der in Fig. 4 dargestellten zweiten Ausführungsform überein, auf deren vorstehende Beschreibung insoweit Bezug genommen wird.

Dadurch, dass bei den in den Fig. 4 bis 7 dargestellten zweiten bis vierten Ausführungsformen einer Vorrichtung 100 zum Abtrennen von Fluidlack-Overspray die Sicherheitsfilterstufe erst dann zugeschaltet wird, wenn ein Filterdurchbruch an mindestens einem der Filterelemente 122 des Hauptfilters detektiert worden ist, wird der Druckverlust durch den Sicherheitsfilter 168 im normalen Betriebszustand des Filtermoduls 102 minimiert, wobei gleichwohl die notwendige Sicherheit gegen eine Verschmutzung der Reingasseite des Umluftkreislaufs der Lackieranlage im Falle eines Filterdurchbruchs gewährleistet bleibt.

## Patentansprüche

1. Filtervorrichtung zum Abtrennen von Lack-Overspray aus einem Overspray-Partikel enthaltenden Rohgasstrom (104), umfassend mindestens ein Filterelement (122), welchem zumindest ein Teil des Rohgasstroms (104) zuführbar ist, und
eine Reingaskammer (124), welcher der mittels des Filterelements (122) gefilterte Rohgasstrom (104) als Reingasstrom zuführbar ist,
wobei mindestens ein Filterelement (122) der Filtervorrichtung (102) im Betrieb der Filtervorrichtung (102) mit einer Sperrschicht, die ein Filterhilfsmaterial enthält, versehen ist,
**dadurch gekennzeichnet,**
**dass** der Reingaskammer (124) mindestens ein stromabwärts von dem mindestens einen Filterelement (122) angeordnetes Sicherheitsfilter (168) zugeordnet ist, mittels welchem zumindest ein Teil des Rohgasstroms (104) im Falle eines Filterdurchbruchs an mindestens einem Filterelement (122) filterbar ist, und
**dass** die Filtervorrichtung (102) einen Reingaskanal (162) umfasst, durch welchen Reingas aus der Reingaskammer (124) einem Reingas-Sammelkanal (164) zuführbar ist, wobei der Reingas-Sammelkanal (164) auch das Reingas mindestens einer anderen Filtervorrichtung (102) aufnimmt und der Sicherheitsfilter (168) der Filtervorrichtung (102) stromaufwärts von einer Einmündung des Reingaskanals (162) in den Reingas-Sammelkanal (164) angeordnet ist.

2. Filtervorrichtung nach Anspruch 1, **dadurch gekennzeichnet, dass** mindestens ein Sicherheitsfilter (168) innerhalb der Reingaskammer (124) oder an einer Begrenzungswand der Reingaskammer (124) angeordnet ist.

3. Filtervorrichtung nach einem der Ansprüche 1 oder 2, **dadurch gekennzeichnet, dass** mindestens ein Filterelement (122) an der Reingaskammer (124) gehalten ist.

4. Filtervorrichtung nach einem der Ansprüche 1 bis 3, **dadurch gekennzeichnet, dass** mindestens ein Sicherheitsfilter (168) so an der Filtervorrichtung (102) angeordnet ist, dass mindestens ein Filterelement (122) aus der Filtervorrichtung (102) entnehmbar ist, ohne zuvor den Sicherheitsfilter (168) zu entnehmen.

5. Filtervorrichtung nach einem der Ansprüche 1 bis 4, **dadurch gekennzeichnet, dass** der Sicherheitsfilter (168) mindestens einen Trockenfilter umfasst.

6. Filtervorrichtung nach einem der Ansprüche 1 bis 5, **dadurch gekennzeichnet, dass** das Sicherheitsfilter (168) einen Prallfilter, einen Taschenfilter (176), einen Schlauchfilter, einen Mattenfilter, einen Plattenfilter und/oder einen Röhrenfilter umfasst.

7. Filtervorrichtung nach einem der Ansprüche 1 bis 6, **dadurch gekennzeichnet, dass** mindestens ein Sicherheitsfilter (168) im Falle eines Filterdurchbruchs an einem Filterelement (122) für die Filtration von durch das Filterelement (122) gelangendem Rohgas aktivierbar ist.

8. Filtervorrichtung nach Anspruch 7, **dadurch gekennzeichnet, dass** mindestens ein Sicherheitsfilterelement (172) mindestens eines Sicherheitsfilters (168) im Falle eines Filterdurchbruchs in einen Strömungsweg des Rohgases einbringbar ist.

9. Filtervorrichtung nach einem der Ansprüche 7 oder 8, **dadurch gekennzeichnet, dass** mindestens ein Sicherheitsfilterelement (172) mindestens eines Sicherheitsfilters (168) im Falle eines Filterdurchbruchs mit Filtermaterial befüllbar ist.

10. Filtervorrichtung nach einem der Ansprühce 7 bis 9, **dadurch gekennzeichnet, dass** mindestens ein Sicherheitsfilterelement (172) mindestens eines Sicherheitsfilters (168) im Falle eines Filterdurchbruchs durch Anlegen einer elektrischen Spannung aktivierbar ist.

11. Filtervorrichtung nach einem der Ansprûche 1 bis 10, **dadurch gekennzeichnet, dass** die Filtervorrichtung (102) mindestens eine Detektionsvorrichtung zum Detektieren eines Filterdurchbruchs an einem Filterelement (122) umfasst.

12. Filtervorrichtung nach Anspruch 11, dadurch gekennziechnet, dass mindestens eine Detektionsvorrichtung einen Partikelzähler, einen Druckverlustmesser, einen Filterwiderstandsmesser zur Messung des Druchgangswiderstands mindestens eines Filterelements (122) und/oder einen Filterwiderstandsmesser zur Messung des Durchgangswiderstands mindestens eines Sicherheitsfilters (168) umfasst.

13. Verfahren zum Abtrennen von Lack-Overspray aus einem Oversray-Partikel enthaltenden Rohgasstrom (104), umfassend folgende Verfahrensschritte:
- Zuführen zumindest eines Teils des Rohgasstroms (104) zu mindestens einem Filterelement (122) einer Filtervorrichtung (102), mittels welchem der zugeführte Rohgasstrom (104) gefiltert wird, wobei mindestens ein Filterelement (122) der Filtervorrichtung (102) im Betrieb der Filtervorrichtung (102) mit einer Sperrschicht, die ein Filterhilfsmaterial enthält, versehen ist; und
- Zuführen des mittels des Filterelements (122) gefilterten Rohgasstroms (104) als Reingasstrom zu einer Reingaskammer (124);
**dadurch gekennzeichnet,**
**dass** im Falle eines Filterdurchbruchs an mindestens einem Filterelement (122) der der Reingaskammer (124) zugeführte Rohgasstrom (104) mittels eines stromabwärts von dem Filterelement (122) angeordneten und der Reingaskammer (124) zugeordneten Sicherheitsfilters (168) gefiltert wird und
**dass** die Filtervorrichtung (102) einen Reingaskanal (162) umfasst, durch welchen Reingas aus der Reingaskammer (124) einem Reingas-Sammelkanal (164) zugeführt wird, wobei der Reingas-Sammelkanal (164) auch das Reingas mindestens einer anderen Filtervorrichtung (102) stromaufwärts von einer Einmündung des Reingaskanals (162) in den Reingas-Sammelkanal (164) angeordnet ist.

## Claims

1. Filter device for separating paint overspray from a raw gas flow (104) containing overspray particles, comprising at least one filter element (122), to which at least a part of the raw gas flow (104) is feedable, and
a clean gas chamber (124), to which the raw gas flow (104) filtered by means of the filter element (122) is feedable as a clean gas flow,
wherein at least one filter element (122) of the filter device (102), during operation of the filter device (102), is provided with a barrier layer, which contains an auxiliary filter material,
**characterised in that**
at least one safety filter (168), which is arranged downstream of the at least one filter element (122) and by means of which at least a part of the raw gas flow (104) is filterable in the event of a filter rupture at at least one filter element (122), is associated with the clean gas chamber (124), and **in that**
the filter device (102) comprises a clean gas channel (162), through which clean gas is feedable from the clean gas chamber (124) to a clean gas collecting channel (164), the clean gas collecting channel (164) also receiving the clean gas of at least one other filter device (102) and the safety filter (168) of the filter device (102) being arranged upstream of a junction of the clean gas channel (162) into the clean gas collecting channel (164).

2. Filter device according to claim 1, **characterised in that** at least one safety filter (168) is arranged within the clean gas chamber (124) or on a delimiting wall of the clean gas chamber (124).

3. Filter device according to either of claims 1 or 2, **characterised in that** at least one filter element (122) is held on the clean gas chamber (124).

4. Filter device according to any one of claims 1 to 3, **characterised in that** at least one safety filter (168) is arranged on the filter device (102) in such a way that at least one filter element (122) is removable from the filter device (102), without removing the safety filter (168) beforehand.

5. Filter device according to any one of claims 1 to 4, **characterised in that** the safety filter (168) comprises at least one dry filter.

6. Filter device according to any one of claims 1 to 5, **characterised in that** the safety filter (168) comprises a baffle filter, a pocket filter (176), a bag filter, a mat filter, a plate filter and/or a tube filter.

7. Filter device according to any one of claims 1 to 6, **characterised in that** at least one safety filter (168) is activatable in the event of a filter rupture at a filter element (122) for the filtration of raw gas arriving through the filter element (122).

8. Filter device according to claim 7, **characterised in that** at least one safety filter element (172) of at least one safety filter (168) is configured to be introduced into a flow path of the raw gas in the event of a filter rupture.

9. Filter device according to either of claims 7 or 8, **characterised in that** at least one safety filter element (172) of at least one safety filter (168) is fillable with filter material in the event of a filter rupture.

10. Filter device according to any one of claims 7 to 9, **characterised in that** at least one safety filter element (172) of at least one safety filter (168) is activatable by applying an electric voltage in the event of a filter rupture.

11. Filter device according to any one of claims 1 to 10, **characterised in that** the filter device (102) comprises at least one detection device for detecting a filter rupture at a filter element (122).

12. Filter device according to claim 11, **characterised in that** at least one detection device comprises a particle counter, a pressure loss measuring device, a filter resistance measuring device for measuring the flow resistance of at least one filter element (122) and/or a filter resistance measuring device for measuring the flow resistance of at least one safety filter (168).

13. Method for separating paint overspray from a raw gas flow (104) containing overspray particles, comprising the following method steps:
- feeding at least a part of the raw gas flow (104) to at least one filter element (122) of a filter device (102), by means of which the raw gas flow (104) that is fed is filtered, wherein at least one filter element (122) of the filter device (102), during operation of the filter device (102), is provided with a barrier layer, which contains an auxiliary filter material; and
- feeding the raw gas flow (104) filtered by means of the filter element (122) as a clean gas flow to a clean gas chamber (124);
**characterised in that**,
in the event of a filter rupture at at least one filter element (122), the raw gas flow (104) fed to the clean gas chamber (124) is filtered by means of a safety filter (168) arranged downstream of the filter element (122) and associated with the clean gas chamber (124), and **in that**
the filter device (102) comprises a clean gas channel (162), through which clean gas is fed from the clean gas chamber (124) to a clean gas collecting channel (164), the clean gas collecting channel (164) also receiving the clean gas of at least one other filter device (102) and the safety filter (168) of the filter device (102) being arranged upstream of a junction of the clean gas channel (162) into the clean gas collecting channel (164).

## Revendications

1. Dispositif de filtration servant à séparer le brouillard de peinture d'un flux de gaz brut (104) contenant des particules de brouillard, comprenant au moins un élément filtrant (122) vers lequel au moins une partie du flux de gaz brut (104) peut être acheminé, et une chambre à gaz purifié (124), vers laquelle le flux de gaz brut (104), filtré au moyen de l'élément filtrant (122), peut être acheminé sous forme de flux de gaz purifié, au moins un élément filtrant (122) du dispositif de filtration (102) étant doté d'une couche de barrage, contenant un matériau filtrant auxiliaire, lorsque le dispositif de filtration fonctionne,
**caractérisé en ce qu'**
au moins un filtre de sécurité (168), disposé en aval d'au moins un élément filtrant (122), est affecté à la chambre à gaz purifié (124), filtre de sécurité au moyen duquel une partie du flux de gaz brut (104) peut être filtrée en cas de rupture du filtre sur au moins un élément filtrant (122), et
**en ce que** le dispositif de filtration (102) comprend un canal à gaz purifié (162), à travers lequel du gaz purifié peut être acheminé depuis la chambre à gaz purifié (124) vers un canal collecteur de gaz purifié (164), le canal collecteur de gaz purifié (164) accueillant également le gaz purifié d'au moins un autre dispositif de filtration (102) et le filtre de sécurité (168) du dispositif de filtration (102) étant disposé en amont d'une entrée du canal de gaz purifié (162) dans le canal collecteur de gaz purifié (164).

2. Dispositif de filtration selon la revendication 1, **caractérisé en ce qu'**au moins un filtre de sécurité (168) est disposé à l'intérieur de la chambre à gaz purifié (124) ou sur une paroi de délimitation de celle-ci.

3. Dispositif de filtration selon l'une quelconque des revendications 1 ou 2, **caractérisé en ce qu'**au moins un élément filtrant (122) est maintenu contre la chambre à gaz purifié (124).

4. Dispositif de filtration selon l'une quelconque des revendications 1 à 3, **caractérisé en ce qu'**au moins un filtre de sécurité (168) est disposé sur le dispositif de filtration (102), de telle façon qu'au moins un élément filtrant (122) peut être retiré du dispositif de filtration (102) sans retirer auparavant le filtre de sécurité (168).

5. Dispositif de filtration selon l'une quelconque des revendications 1 à 4, **caractérisé en ce que** le filtre de sécurité (168) comprend au moins un filtre sec.

6. Dispositif de filtration selon l'une quelconque des revendications 1 à 5, **caractérisé en ce que** le filtre de sécurité (168) comprend un filtre à chicane, un filtre à poche (176), un filtre à manche, un filtre natte, un filtre à plaques et/ou un filtre tubulaire.

7. Dispositif de filtration selon l'une quelconque des revendications 1 à 6, **caractérisé en ce qu'**au moins un filtre de sécurité (168) peut être activé pour la filtration du gaz brut traversant l'élément filtrant (122) en cas de perforation d'un élément filtrant (122).

8. Dispositif de filtration selon la revendication 7, **caractérisé en ce qu'**au moins un élément filtrant (172) d'au moins un filtre de sécurité (168) peut être introduit dans une voie d'écoulement du gaz brut en cas de perforation d'un filtre.

9. Dispositif de filtration selon l'une quelconque des revendications 7 ou 8, **caractérisé en ce qu'**au moins un élément filtrant (172) d'au moins un filtre de sécurité (168) peut être rempli d'un matériau filtrant en cas de perforation d'un filtre.

10. Dispositif de filtration selon l'une quelconque des revendications 7 à 9, **caractérisé en ce qu'**au moins un élément filtrant (172) d'un filtre de sécurité (168) peut être activé par l'application d'une tension électrique en cas de perforation d'un filtre.

11. Dispositif de filtration selon l'une quelconque des revendications 1 à 10, **caractérisé en ce que** le dispositif de filtration (102) comprend au moins un dispositif de détection pour détecter une perforation sur un élément filtrant (122).

12. Dispositif de filtration selon la revendication 11, **caractérisé en ce qu'**au moins un dispositif de détection comprend un compteur de particules, un compteur de perte de charge, un appareil de mesure de la résistance à la filtration pour mesurer la résistance de traversée d'au moins un élément filtrant (122) et/ou un appareil de mesure de la résistance à la filtration pour mesurer la résistance de traversée d'au moins un filtre de sécurité (168).

13. Procédé pour séparer le brouillard de peinture d'un flux de gaz brut (104), comprenant les étapes suivantes :
- acheminement d'au moins une partie du flux de gaz brut (104) vers au moins un élément filtrant (122) d'un dispositif de filtration (102) au moyen duquel le flux de gaz brut (104) acheminé est filtré, au moins un élément filtrant (122) du dispositif de filtration (102) étant doté, lorsque le dispositif de filtration (102) est en service, d'une couche de barrage contenant un matériau filtrant auxiliaire; et
- acheminement du flux de gaz brut (104) filtré au moyen de l'élément filtrant (122) en tant que flux de gaz purifié vers une chambre à gaz purifié (124) ;
**caractérisé en ce que**,
dans le cas d'une perforation d'au moins un élément filtrant (122), le flux de gaz brut (104), acheminé vers la chambre à gaz purifié (124), est filtré au moyen d'un filtre de sécurité (168) disposé en aval de l'élément filtrant (122) et affecté à la chambre à gaz purifié (124) et
**en ce que** le dispositif de filtration (102) comprend un canal de gaz purifié (162) à travers lequel du gaz purifié provenant de la chambre à gaz purifié (124) est acheminé vers un canal collecteur de gaz purifié (164), le canal collecteur de gaz purifié (164) accueillant également le gaz purifié d'au moins un autre dispositif de filtration (102) et le filtre de sécurité (168) du dispositif de filtration (102) étant disposé en amont d'une entrée du canal de gaz purifié (162) dans le canal collecteur de gaz purifié (164).
